# EUROPEAN PATENT SPECIFICATION

(11) **EP 0 794 113 B1**
(45) Date of publication and mention of the grant of the patent: **02.06.2004**
(21) Application number: 97100024.5
(22) Date of filing: 02.01.1997
(51) Int. Cl.: B62M 23/02

(54) **Battery for motor-assisted bicycle**
Batterie für ein Fahrrad mit Hilfsmotor
Batterie pour bicyclette à moteur auxiliaire

(30) Priority: 08.03.1996 JP 5211496
(43) Date of publication of application: 10.09.1997
(60) Divisional application: 04007670.5
(73) Proprietor: Honda Giken Kogyo Kabushiki Kaisha, Minato-ku, Tokyo (JP)
(72) Inventor: Kawaguchi, Kenji, Wako-shi, Saitama-ken (JP); Suzuki, Hiroyuki, Wako-shi, Saitama-ken (JP); Iseno, Mitsuru, Wako-shi, Saitama-ken (JP); Shimmura, Hiroyuki, Wako-shi, Saitama-ken (JP)
(74) Representative: Liska, Horst, Dr.-Ing.

(56) References cited:
- EP-A- 0 636 536
- EP-A- 0 686 521
- EP-A- 0 697 331
- GB-A- 2 050 270
- US-A- 4 949 046

## Description

### Field of the invention

The present invention relates to a motor-assisted bicycle according to the preamble of claim 1.

A motor-assisted bicycle according to the preamble of claim 1 is known from EP-A-0 697 331. This document discloses a battery for a motor-assisted bicycle which can be removably mounted on an upper side of a main pipe of said bicycle extending obliquely downwardly between a steering handle bar and pair of pedals. For indicating a charging condition this document also discloses an indicator which is mounted on the battery for which additional measures for sealing and fixing are necessary.

A further motor-assisted bicycle is known from EP-A-0 686 521.

Japanese Utility Model Laid-open No. 58-81865 discloses an on-vehicle battery provided with a capacity indicating function. This function is such that when a push button is depressed by a user, a battery capacity is indicated by comparing a terminal voltage of the on-vehicle battery with a reference voltage.

Japanese Patent Laid-open No. 50-125438 and Japanese Patent Publication No. 54-43776 disclose that a battery for motive power is mounted on a vehicle frame of a bicycle of a motor-assisted bicycle.

Japanese Patent Application No. 7-300766 describes in detail a battery for a motor-assisted bicycle adapted to be removably mounted on the upper side of a main pipe of the bicycle.

Japanese Patent Laid-open No. 59-5975 discloses that electric energy charged and discharged is integrated to indicate a remaining capacity of a battery.

In the case that a battery meter is provided on a battery for a motor-assisted bicycle, it is preferable in view of ease of use that the battery can be charged outdoors in its on- vehicle condition and that the battery can be charged also indoors in the condition that it has been removed from the bicycle.

Further, in computing a remaining capacity of the battery, it is preferable in view of accuracy to integrate an amperage flowing into and out of the battery.

### Problem to be Solved by the Invention

There is a possibility that a remaining capacity of the battery cannot be checked during operation of the bicycle, depending on a mount position of the battery meter. When the battery meter is mounted behind a saddle of the bicycle, for example, it is inconvenient that the operator must ride off the bicycle every time he/she intends to check a remaining capacity of the battery.

Further, there is a possibility that when the battery meter is merely mounted in the battery, the battery meter may be covered with a protective cover or an upper cover of the battery, so that the battery meter cannot be seen from the outside.

In this case, it is inconvenient to remove the upper cover or the like every time the operator intends to check a remaining capacity of the battery.

In the case that the battery meter is mounted on the battery at a directly visible position, it is necessary to protect the inside of the battery inclusive of the battery meter in consideration of the fact that the bicycle is exposed to the weather or the like. For example, the battery must be made waterproof and dustproof.

As an example of the battery meter for indicating a remaining capacity of the battery, a moving coil instrument is known. The moving coil instrument makes an indication by rotation of a needle. However, a space for allowing the rotation of the needle is necessary in the moving coil instrument, and a further reduction in size of the instrument is desired. It is an object of the present invention to provide a motor-assisted bicycle according to the preamble of claim 1, wherein the battery allows an operator to check a remaining capacity of the battery reliably in all operational conditions, and which is easy to assemble.

This object is solved by a motor-assisted bicycle according to claim 1.

### Effect of the Invention

Preferably, the battery meter for externally indicating a remaining capacity of the battery is located in the vicinity of the handle post when the battery is mounted on the upper side of the main pipe. Accordingly, the operator can visually check the remaining capacity of the battery without the need for so moving the operator's neck or line of sight during operating the bicycle, thus determining a remaining travel distance and time by assisted power.

When the battery is mounted on the upper side of the main pipe, the battery meter is located in the vicinity of the handle post. Further, the battery meter externally indicates a remaining capacity of the battery.

Accordingly, an operator can visually check the remaining capacity without the need for so moving the operator's neck or line of sight during operation of the bicycle.

By locating a charging connector on one side surface or the like of the battery, the battery can be charged outdoors in the condition where it remains mounted on the bicycle. Further, the battery can be charged with its remaining capacity checked also indoors in the condition where the battery has been removed from the bicycle.

Preferably, said battery comprises an upper case or cover, a lower case or cover, and a battery body, said battery meter being mounted inside of said upper case.

Since the battery meter is mounted inside of the upper cover, the battery meter, especially, its control circuit and an IC or the like constituting the control circuit, can be prevented from being exposed directly to the weather or the like.

In the case that the remaining capacity of the battery is detected from the temperature of the battery body, a temperature sensor in the battery meter can accurately detect the temperature of the battery body, because the battery meter is located inside of the battery. This improves the reliability of the battery meter.

Preferably, said battery comprises an upper cover, a lower cover, a battery body, and a spacer provided between said battery body and said upper cover, said battery meter being mounted on said spacer.

Since the battery meter is mounted on the spacer provided between the battery body and the upper cover, the battery meter, especially, its control circuit and an IC or the like constituting the control circuit, can be prevented from being exposed directly to the weather or the like.

In the case that the remaining capacity of the battery is detected from the temperature of the battery body, a temperature sensor in the battery meter can accurately detect the temperature of the battery body, because the battery meter is located inside the battery. This improves the reliability of the battery meter.

Further, rattling in the battery can be suppressed by the spacer.

Preferably, said spacer is provided with walls for surrounding said battery meter and seatings abutting against one of walls located on said handle post side for supporting end portions of said battery meter; said walls and said seatings being provided with clearances for passing a harness extending from said battery meter to lead said harness to the opposite side of said handle post.

Since the battery meter is fitted inside the walls formed on the spacer, the spacer and the battery meter can be easily integrated together, thus facilitating the assembly of the battery equipped with the battery meter.

Since said spacer is provided with walls for surrounding said battery meter and seatings abutting against one of walls located on said handle post side for supporting end portions of said battery meter, and said walls and said seatings are provided with clearances for passing a harness extending from said battery meter to lead said harness to the opposite side of said handle post, a connected portion between the battery meter and the harness can be prevented from being wet with water flowing from the handle post side into the battery, thus improving the reliability of the battery meter.

Preferably, said spacer is provided with a harness guide for guiding said harness extending from said battery meter and passing through said clearances.

Since the harness guide is provided, the harness can be prevented from being caught by the upper cover in setting the upper cover. Also from this viewpoint, the assembly of the battery equipped with the battery meter can be facilitated.

Preferably, the indicating portion of the battery meter may be configured by a digital display, or a pie chart using light emitting diodes or liquid crystal display (LCD). Further, the indicating portion may be configured by a moving coil instrument.

The battery meter may be modified to detect a moment of full charge in order to improve the accuracy of indication of a remaining capacity of the battery as described in Japanese Patent Application No. 8-8564. Conventional battery meters are described in Japanese Patent Laid-open No. 59-5957 and Japanese Patent Application No. 8-8564. Further, a conventional battery for a motor- assisted bicycle removably mounted on the upper side of a main pipe of the bicycle is described in Japanese Patent Application No. 7-300766. These conventional battery meters and battery may be referred to.

Preferably, said battery meter has an indicating portion configured by or comprising a bar graph meter employing a plurality of light emitting diodes arranged in an array, and said upper cover is provided with a window corresponding to the array of said light emitting diodes.

Since the remaining capacity of the battery is indicated by the bar graph meter, an indication space can be reduced in size, and the operator can quickly visually grasp an approximate value of the remaining capacity of the battery.

Further, since the upper cover is formed with the window corresponding to the array of the light emitting diodes, the light from the light emitting diodes can be radiated to the outside of the battery, thus allowing external indication.

In particular, when operating the bicycle at high speeds, the effect that the operator can quickly grasp the remaining capacity becomes remarkable.

Further, since the bar graph meter is constructed of the light emitting diodes, the operator can conveniently determine the remaining capacity and the charge amount of the battery even at night or at a dark place.

Preferably, said window is covered with a label having a transparent portion at a position corresponding to said window, said label being attached to a label attachment area of said upper cover, said label attachment area being higher in level than its surrounding portion.

Since the label having the transparent portion at a position corresponding to the window is attached to the upper cover to thereby cover the window, rainwater and dust can be prevented from entering the battery from the window.

Further, since the label attachment area of the upper cover is higher in level than its surrounding portion, rainwater present in the periphery of the label attached to the upper cover can be quickly removed to flow down, thereby preventing penetration of the rainwater from the periphery of the label.

Thus, according to the present invention, it is possible to provide a battery for a motor-assisted bicycle which allows the operator to conveniently check a remaining capacity of the battery even during operation of the bicycle.

### Preferred Embodiment

Some preferred embodiments of the present invention will now be described with reference to the drawings.

### BRIEF DESCRIPTION OF THE DRAWINGS

FIG. 1 is a side view of a motor-assisted bicycle on which the battery according to the present invention is mounted.
FIG. 2 is a partially cutaway, side view of the battery according to the present invention.
FIG. 3 is a partially cutaway, enlarged side view of an essential part of the battery shown in FIG. 2 in the vicinity of a handle of the battery.
FIG. 4 is a top plan view of a battery according to a preferred embodiment of the present invention.
FIG. 5 is a partially cutaway, side view of an upper cover of the battery shown in FIG. 4.
FIGS. 6(a) and 6(b) are top plan views of different types of labels each adapted to be attached to the upper cover of the battery according to the present invention.
FIG. 7 is a top plan view of a battery according to another preferred embodiment of the present invention.
FIG. 8 is a partially cutaway, top plan view of the battery shown in FIG. 7.
FIG. 9 is a partially cutaway, side view of the battery shown in FIG. 7.
FIG. 10 is a top plan view of a spacer having walls, seatings, and harness guides in the battery shown in FIGS- 8 and 9.
FIG. 11 is a cross section taken along the line I-I in FIG. 10.
FIG. 12 is a front elevation of the spacer shown in FIG. 10.
FIG. 13 is a schematic block diagram of the battery according to the present invention.

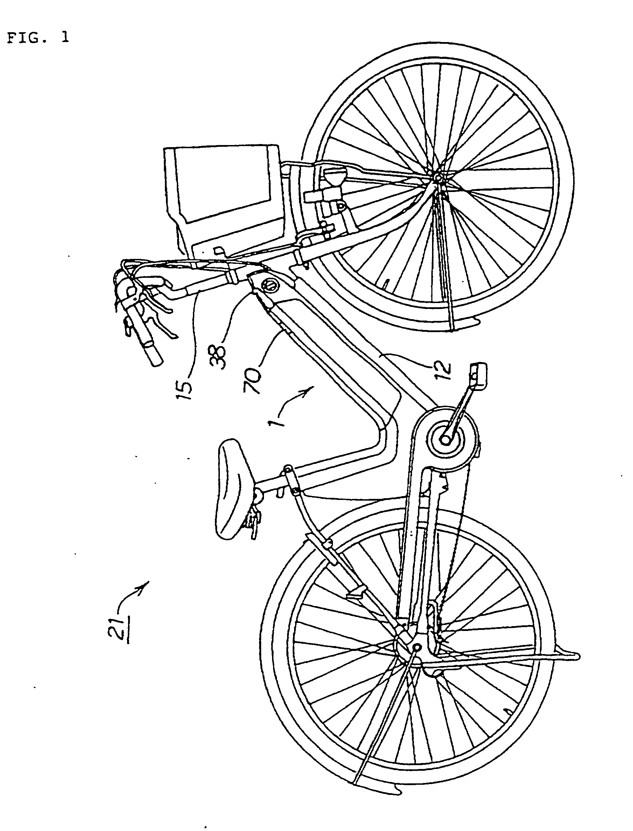

FIG. 1 is a side view of a motor-assisted bicycle (assisted bicycle) 21 with a removable battery 1 according to the present invention mounted on the upper side of a main pipe 12 as a main frame of the bicycle 21.

When the battery 1 is mounted on the upper side of the main pipe 12 as shown in FIG. 1, a handle 38 of the battery 1 is positioned in the vicinity of a handle post (steering shaft) or stem 15 of the bicycle 21.

A label 70 is attached on the battery 1 at a position where a remaining capacity of the battery 1 is indicated.

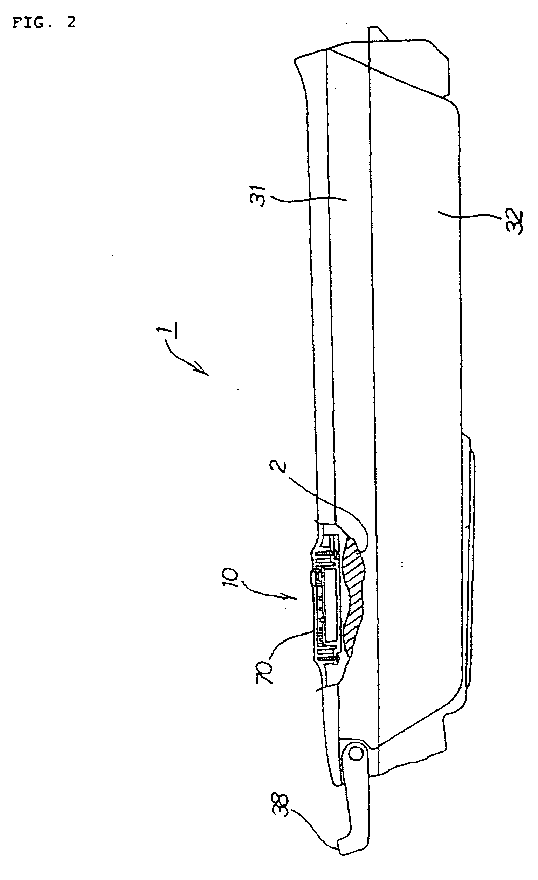

As shown in FIG. 2, the battery 1 includes a battery meter 10 for indicating a remaining capacity of the battery 1. The battery meter 10 is provided in the vicinity of the handle 38.

The battery 1 is composed generally of an upper cover 31, a lower cover 32, and a battery body 2. The battery meter 10 is mounted inside of the upper cover 31.

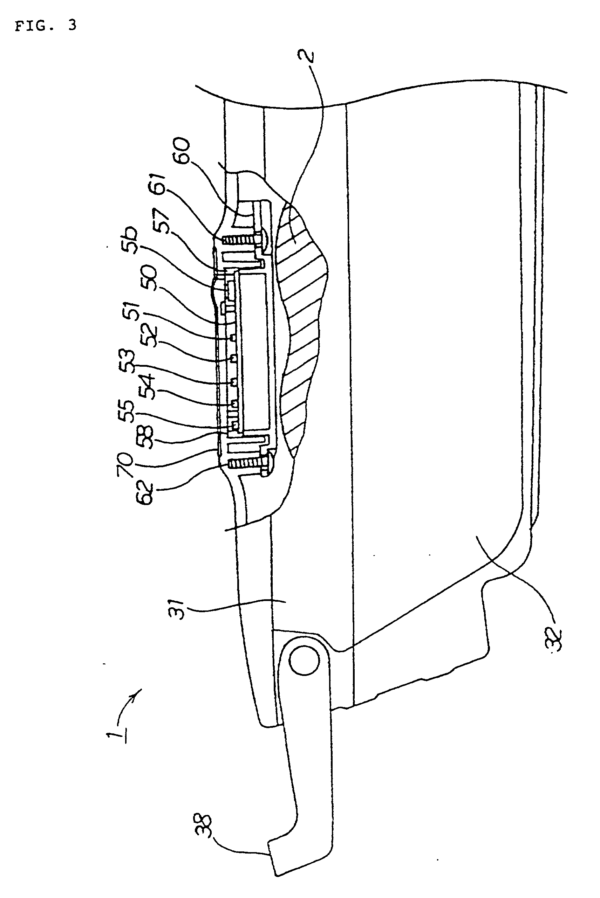

FIG. 3 is a partially cutaway, enlarged side view of an essential part of the battery 1 in the vicinity of the handle 38.

The battery meter 10 includes a substrate 50, a plurality of light emitting diodes (indicator segments) 51 to 55 arranged in an array, a push button 5b, a detecting portion (not shown), and an integrating portion (not shown). The light emitting diodes 51 to 55 and the push button 5b are mounted on the upper surface of the substrate 50. The detecting portion (not shown) and the integrating portion (not shown) are mounted on the lower surface of the substrate 50.

The substrate 50 is fitted with seatings 57 and 58 formed on the inner surface of the upper cover 31. A cover 60 for pressing the substrate 50 is fixed to the upper cover 31 by screws 61 and 62.

The light emitting diodes 51 to 55 mounted on the substrate 50 constitute a bar graph meter, and are turned on according to a remaining capacity of the battery. The upper cover 31 is formed with a window (not shown) just above the array of the light emitting diodes 51 to 55. Accordingly, a remaining capacity of the battery is indicated by the light from the light emitting diodes 51 to 55 through the window to the outside.

In the condition that the battery 1 is mounted on the upper side of the main pipe 12 of the bicycle 21 as shown in FIG. 1, the upper surface of the upper cover 31 is directed to the rear upper side of the bicycle 21.

The substrate 50 is mounted substantially parallel to the upper surface of the upper cover 31. Therefore, a remaining capacity of the battery is indicated to the rear upper side of the bicycle 21.

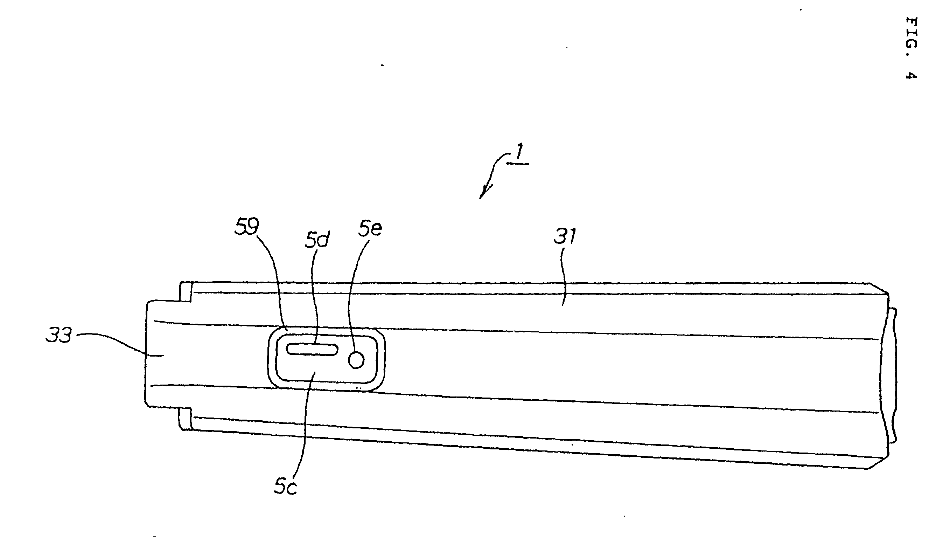

FIG. 4 is a top plan view of the battery 1 according to a preferred embodiment of the present invention.

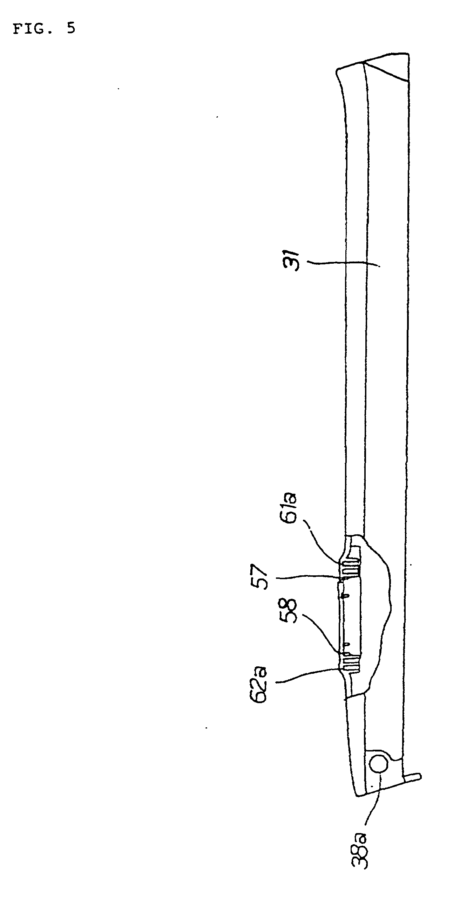

FIG. 5 is a partially cutaway, side view of the upper cover 31 of the battery 1 shown in FIG. 4.

The handle (not shown) of the battery 1 is pivotably mounted on a handle shaft 38a provided at a front end portion 33 of the upper cover 31.

A label attachment area 5c is provided in the vicinity of the front end portion 33 of the upper cover 31.

The label attachment area 5c is higher in level than its surrounding portion. Reference numeral 59 denotes a bank portion formed so as to surround the label attachment area 5c.

A window 5d is formed in the label attachment area 5c. The light emitting diodes (not shown) are arranged in an array just below the window 5d.

A projecting portion 5e is formed in the label attachment area 5c. The push button (not shown) is positioned just below the projecting portion 5e. The projecting portion 5e can be flexed downward, so that when the projecting portion 5e is depressed, the push button (not shown) is pushed by the projecting portion 5e.

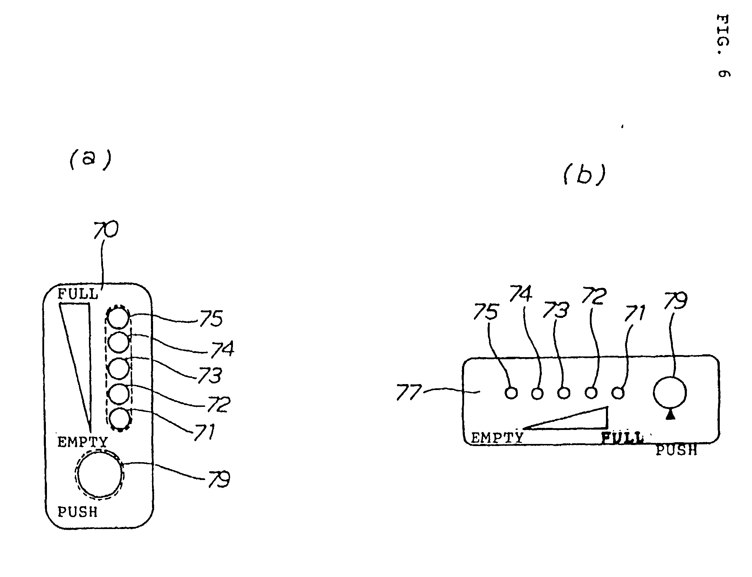

A label 70 as shown in FIG. 6(a) is attached to the label attachment area 5c to cover the window 5d. The label attachment area 5c has a size substantially the same as or slightly larger than the size of the label 70.

In FIG. 5, reference numerals 57 and 58 denote seatings for fittedly holding the substrate on which the light emitting diodes are mounted, and reference numerals 61a and 62a denote tapped holes for threadedly engaging the screws for fixing the cover for pressing the substrate.

FIGS. 6(a) and 6(b) show different examples of the label to be attached to the label attachment area. The label may be formed from a film (e.g. PVC) or a seal.

The label 70 shown in FIG. 6(a) is adapted to be attached to the label attachment area 5c of the upper cover 31 of the battery 1 shown in FIG. 4. The label 70 has a plurality of transparent portions 71 to 75 arranged in an array. When the label 70 is attached to the label attachment area 5c, the transparent portions 71 to 75 are positioned just above the window 5d so as to respectively correspond to the light emitting diodes 51 to 55 (see FIG. 3). The label 70 further has a curved portion 79 at a position where when the label 70 is attached to the label attachment area 5c, the curved portion 79 is positioned just above the projecting portion 5e. The curve of the curved portion 79 is set so as to cover the projecting portion 5e.

In the preferred embodiment shown in FIGS. 2 to 5, the light emitting diodes of the battery meter are arranged in a longitudinal direction of the battery 1 to indicate a remaining capacity of the battery. Alternatively, the light emitting diodes may be arranged in a lateral direction of the battery 1 to indicate a remaining capacity of the battery.

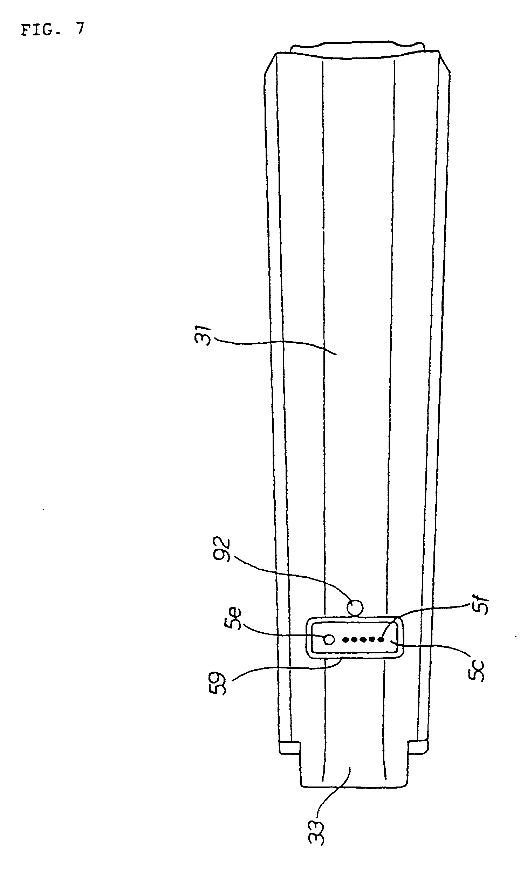

A label 77 shown in FIG. 6(b) is adapted to be attached to the battery 1 shown in FIG. 7. The label 77 has a plurality of transparent portions 71 to 75 arranged in an array just above corresponding windows 5f, and also has a curved portion 79 positioned just above a projecting portion 5e. The curve of the curved portion 79 is set so as to cover the projecting portion 5e.

FIG. 7 is a top plan view of the battery 1 according to another preferred embodiment of the present invention.

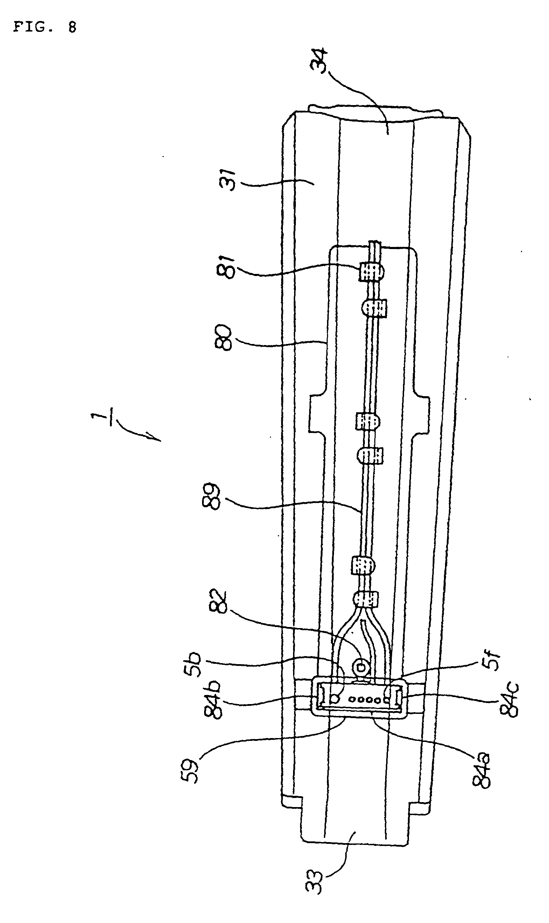

FIG. 8 is a top plan view, partially broken away, of the battery 1 shown in FIG. 7.

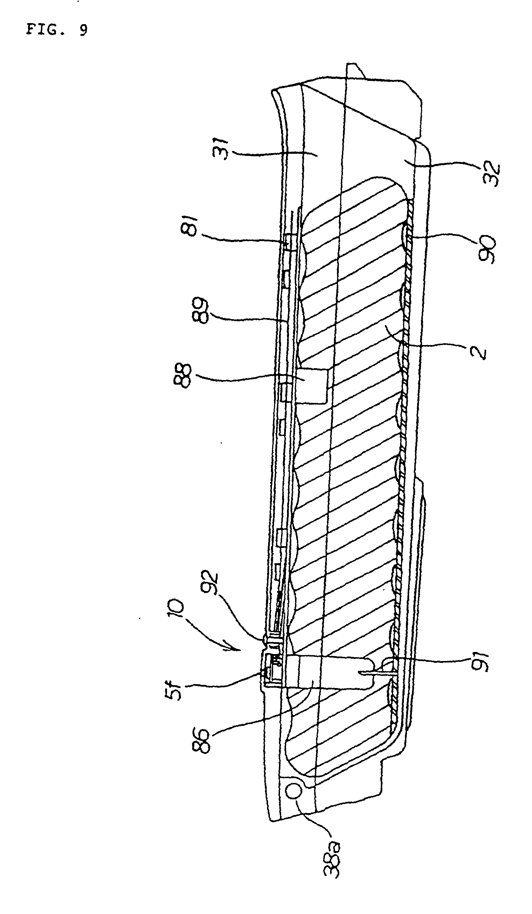

FIG. 9 is a side view, partially broken away, of the battery 1 shown in FIG. 7.

A handle (not shown) of the battery 1 shown in FIGS. 7 to 9 is pivotably mounted on a handle shaft 38a provided at a front end portion 33 of an upper cover 31.

A label attachment area 5c is provided in the vicinity of the front end portion 33 of the upper cover 31.

The label attachment area 5c is higher in level than its surrounding portion. Reference numeral 59 denotes a bank portion surrounding the label attachment area 5c.

A plurality of light emitting diodes (not shown) arranged in an array are positioned just below the corresponding windows 5f.

A push button (not shown) is positioned just below the projecting portion 5e. The projecting portion 5e can be flexed downward, so that when the projecting portion 5e is depressed, the push button (not shown) is pushed by the projecting portion 5e.

When the label 77 shown in FIG. 6(b) is attached to the label attachment area 5c, the windows 5f are covered with the label 77 so as to respectively correspond to the transparent portions 71 to 75 of the label 77. The size of the label attachment area 5c is set substantially the same as or slightly larger than the size of the label 77.

As shown in FIGS. 8 and 9, the battery 1 according to this preferred embodiment is composed generally of an upper cover 31, a lower cover 32, a battery body 2, and a spacer 80 provided between the battery body 2 and the upper cover 31. A battery meter 10 is mounted on the spacer 80.

The spacer 80 is fixed to the upper cover 31 by a screw 92. A head portion of the screw 92 may be covered with the label 77 by increasing the sizes of the label 77 and the label attachment area 5c.

A rubber cushion 90 is laid below the battery body 2.

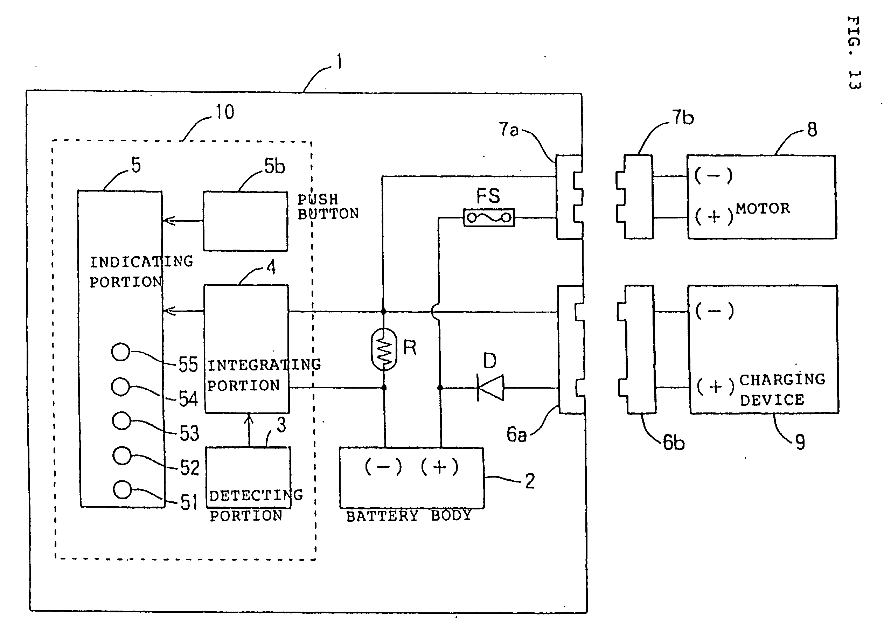

As will be hereinafter described, a fuse FS, a diode D, etc. as shown in FIG. 13 are accommodated in a space defined at a rear end portion 34 of the battery 1, and connectors 6a and 7a are mounted at the rear end of the battery 1.

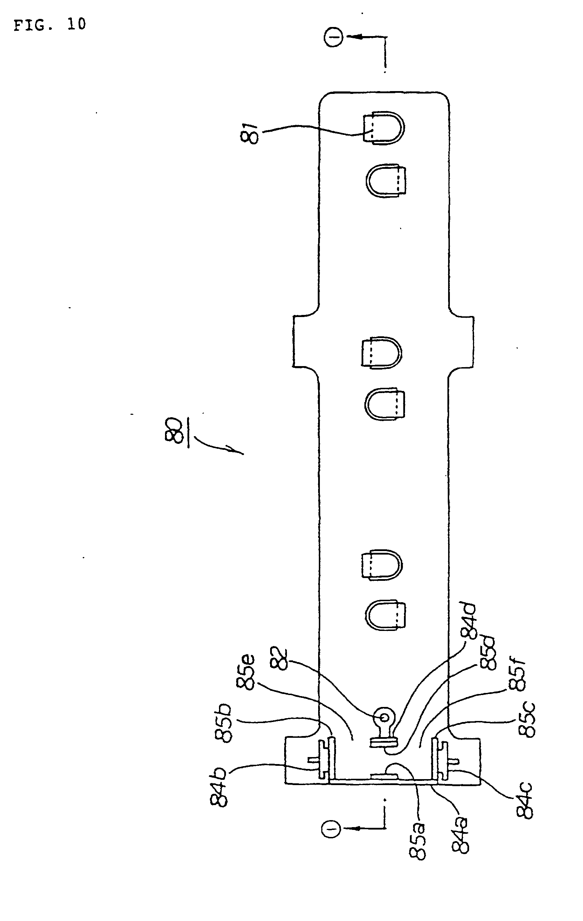

FIG. 10 is a top plan view of the spacer 80.

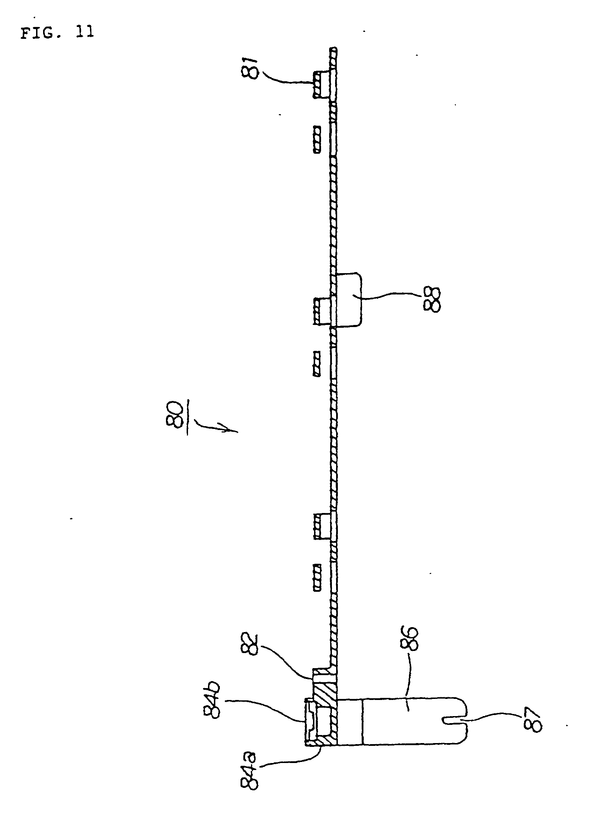

FIG. 11 is a cross section taken along the line I-I in FIG. 10.

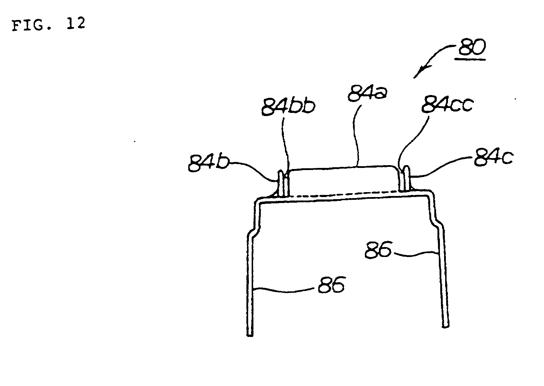

FIG. 12 is a front elevation of the spacer 80.

The spacer 80 is provided with a plurality of walls 84a, 84b, 84c, and 84d for surrounding the battery meter 10 and a plurality of seatings 85a, 85b, 85c, and 85d for supporting the four side edges of the battery meter 10.

The seatings 85a, 85b, and 85c are in abutment against the wall 84a located on the handle post side.

The seatings 85b and 85d are spaced from each other and the walls 84b and 84d are spaced from each other to define a clearance 85e. Similarly, the seatings 85c and 85d are spaced from each other and the walls 84c and 84d are spaced from each other to define a clearance 85f. The clearances 85e and 85f are defined for the purpose of passing a harness 89 (see FIGS. 8 and 9) extending from the battery meter 10 to lead the harness 89 to the rear side opposite to the handle post.

The spacer 80 is provided with six harness guides 81 for guiding the harness 89 extending from the battery meter 10 and passing through the clearances 85e and 85f.

The spacer 80 is further provided with a pair of positioning guides 86 at a front end portion and a pair of positioning guides 88 at an intermediate portion. As shown in FIG. 11, each positioning guide 86 is formed with a slit 87 at a lower end portion. The slit 87 of each positioning guide 86 is engaged with a projection 91 projecting from the inner surface of the lower cover 32 as shown in FIG. 9.

As shown in FIG. 12, the walls 84b and 84c are formed with lugs 84bb and 84cc, respectively, for holding down the battery meter 10 fitted inside the walls 84a, 84b, 84c, and 84d.

FIG. 13 is a schematic block diagram of the battery 1 according to the present invention.

The battery 1 includes a battery meter 10, a battery body 2, a resistor R, a diode D, a fuse FS, and connectors 6a and 7a.

The battery meter 10 includes a detecting portion 3 as a detecting means for detecting a moment of discharge of the battery body 2 for storing electric energy as assisting power of the bicycle, an integrating portion 4 as an integrating means for obtaining a value corresponding to the amount of electric energy in the battery body 2 at the discharge moment as an integral value and integrating electric energy charged and discharged, an indicating portion 5 as an indicating means for indicating the absolute value of a remaining capacity of the battery according to an output from the integrating portion 4, and a push button 5b as an indication button.

The negative terminal of the battery body 2 is connected through the resistor R to one of the two terminals of the connector 7a and one of the two terminals of the connector 6a.

The positive terminal of the battery body 2 is connected through the fuse FS to the other terminal of the connector 7a and through the diode D to the other terminal of the connector 6a.

The detecting portion 3 detects a moment of discharge of the battery body 2 from its terminal voltage, and outputs a detection signal indicative of the discharge moment to the integrating portion 4.

For example, the detecting portion 3 may be configured by a comparator for comparing a terminal voltage and a set voltage, or by the combination with a temperature sensor.

Alternatively, a predetermined discharge moment may be detected by comparing a set value and a digital value obtained by A/D converting a terminal voltage.

The integrating portion 4 receives the detection signal from the detecting portion 3 to obtain a value corresponding to the amount of electric energy of the battery body 2 at the discharge moment as an integral value and integrate an amperage as electric energy charged and discharged. The integral value is an integration of amperage with respect to time, and has a unit of Ah (ampere x hour).

The amperage flowing into or out of the battery body is converted into a voltage by the resistor R, and this voltage is detected by the integrating portion 4.

For example, the integrating portion 4 may be configured by an A/D converter for A/D converting a terminal voltage of the resistor R and a microcomputer having an integrating function.

The resistor R may be included in the battery meter 10.

The indicating portion 5 is configured by a bar graph meter including the light emitting diodes 51 to 55 and the substrate 50 on which the light emitting diodes 51 to 55 are mounted.

The indicating portion 5 turns on any of the light emitting diodes (LED) 51 to 55 according to a signal from the push button 5b and an output signal indicative of the integral value from the integrating portion 4, thereby indicating the absolute value of a remaining capacity of the battery.

For example, the indicating portion 5 may include an LED matrix control circuit for lighting or flashing the light emitting diodes.

To suppress a power consumption, a remaining capacity of the battery is indicated only when the push button 5b is depressed.

The negative terminal of a motor 8 is connected to one of the two terminals of a connector 7b, and the positive terminal of the motor 8 is connected to the other terminal of the connector 7b. The connector 7b has a form mating with the form of the connector 7a.

The assisting power of the bicycle is supplied from the motor 8.

The negative terminal of a charging device 9 is connected to one of the two terminals of a connector 6b, and the positive terminal of the charging device 9 is connected to the other terminal of the connector 6b. The connector 6b has a form mating with the form of the connector 6a.

The amperage to be integrated (added and subtracted) may be corrected according to a battery temperature or the like.

This correction includes discharge rate correction, self- discharge correction, and temperature correction.

It is to be noted that the above preferred embodiments of the present invention are merely illustrative and not limitative.

In summary it is an object to provide a battery for a motor-assisted bicycle which allows an operator to check a remaining capacity of the battery even during operation of the bicycle.

Therefore it is provided a battery 1 for a motor-assisted bicycle 21 adapted to be removably mounted on the upper side of a main pipe 12 of the bicycle 21, wherein a battery meter for externally indicating a remaining capacity of the battery is located in the vicinity of a handle post 15 when the battery 1 is mounted on the upper side of the main pipe 12.

## Claims

1. A motor-assisted bicycle (21) including
a frame provided between a front wheel and a rear wheel, said frame supporting a steering handle bar and a pair of pedals and having a main pipe (12) extending obliquely downwardly between the steering handle bar and the pair of pedals; and
a battery (1) adapted to be removably mounted on an upper side of the main pipe (12) of said bicycle, said battery (1) comprising an upper case (31), a lower case (32), a battery body (2) and a battery meter (10) for indicating a remaining capacity of said battery,
**characterized in that**
said battery meter (10) is mounted inside said upper case (31), wherein said battery meter (10) comprises, mounted on a substrate, an indicating portion (5), a detecting portion (3) and an integrating portion (4), and wherein said upper case (31) is provided with a window (5d) just above the indicating portion (5).

2. A motor-assisted bicycle (21) according to claim 1, wherein the battery (1) has a handle (38), wherein the handle (38) is mounted at one end portion (33) of the battery (1), and wherein the battery meter (10) is provided in the vicinity of said handle (38).

3. A motor-assisted bicycle (21) according to claim 2, wherein the handle (38) is pivotably mounted on a handle shaft (38a) provided at the front end portion (33) of the battery (1).

4. A motor-assisted bicycle (21) according to any one of claims 1 to 3, wherein the battery meter (10) for externally indicating a remaining capacity of said battery (1) is located in the vicinity of a handle post (15) of said bicycle (21) when said battery (1) is mounted on the upper side of said main pipe (12).

5. A motor-assisted bicycle (21) according to any one of claims 1 to 4, wherein said battery (1) comprises an upper cover (31), a lower cover (32), a battery body, and a spacer (80) provided between said battery body and said upper cover (31), said battery meter (10) being mounted on said spacer (80).

6. A motor-assisted bicycle (21) according to claim 5, wherein the upper case (31) corresponds to the upper cover (31) and the lower case (32) corresponds to the lower cover (32).

7. A motor-assisted bicycle (21) according to claim 5,
wherein said spacer (80) is provided with walls (84a, 84b, 84c, 84d) for surrounding said battery meter (10) and seatings (85a, 85b, 85c, 85d) abutting against one of walls (84a) located on said handle post side for supporting end portions of said battery meter (10);
said walls (84a, 84b, 84c, 84d) and seatings (85a, 85b, 85c, 85d) being provided with clearances (85e, 85f) for passing a harness (89) extending from said battery meter (10) to lead said harness (89) to the opposite side of said handle post (15).

8. A motor-assisted bicycle (21) according to claim 7,
wherein said spacer (80) is provided with a harness guide (81) for guiding said harness (89) extending from said battery meter (10) and passing through said clearances (85e, 85f).

9. A motor-assisted bicycle (21) according to any one of claims 1 to 8, wherein said battery meter (10) has an indicating portion (5) configured by a bar graph meter employing a plurality of light emitting diodes (51-55) arranged in an array, and said upper case or cover (31) is provided with a window (5d) corresponding to the array of said light emitting diodes (51-55).

10. A motor-assisted bicycle (21) according to claim 9,
wherein said window (5d) is covered with a label (70; 77) having a transparent portion (71-75) at a position corresponding to said window (5d), said label (70; 77) being attached to a label attachment area (5c) of said upper case or cover (31), said label attachment area (5c) being higher in level than its surrounding portion.

## Patentansprüche

1. Motorunterstütztes Fahrrad (21), umfassend
einen zwischen einem Vorderrad und einem Hinterrad vorgesehenen Rahmen, wobei der Rahmen einen Lenker und ein Paar von Pedalen abstützt und ein Hauptrohr (12) besitzt, welches sich zwischen dem Lenker und dem Paar von Pedalen schräg nach unten erstreckt; und
eine Batterie (1), welche dazu ausgebildet ist, lösbar an einer Oberseite des Hauptrohrs (12) des Fahrrads befestigt zu werden, wobei die Batterie (1) ein oberes Gehäuse (31), ein unteres Gehäuse (32), einen Batteriekörper (2) und ein Batteriemessgerät (10) zur Anzeige einer Restkapazität der Batterie umfasst, **dadurch gekennzeichnet,**
**dass** das Batteriemessgerät (10) im Inneren des oberen Gehäuses (31) angebracht ist, wobei das Batteriemessgerät (10) auf einem Substrat befestigt einen Anzeigeabschnitt (5), einen Erfassungsabschnitt (3) und einen Integrationsabschnitt (4) umfasst und wobei das obere Gehäuse (31) mit einem Fenster (5d) genau über dem Anzeigeabschnitt (5) versehen ist.

2. Motorunterstütztes Fahrrad (21) gemäß Anspruch 1,
wobei die Batterie (1) einen Handgriff (38) besitzt, wobei der Handgriff (38) an einem Endabschnitt (33) der Batterie (1) angebracht ist und
wobei das Batteriemessgerät (10) in der Nähe des Handgriffs (38) vorgesehen ist.

3. Motorunterstütztes Fahrrad (21) gemäß Anspruch 2,
wobei der Handgriff (38) schwenkbar an einem an dem vorderen Endabschnitt (33) der Batterie (1) vorgesehenen Handgriffschaft (38a) befestigt ist.

4. Motorunterstütztes Fahrrad (21) gemäß einem der Ansprüche 1 bis 3,
wobei das Batteriemessgerät (10) zur äußeren Anzeige einer Restkapazität der Batterie (1) in der Nähe einer Lenkstange (15) des Fahrrads (21) angeordnet ist, wenn die Batterie (1) an der Oberseite des Hauptrohrs (12) angebracht ist.

5. Motorunterstütztes Fahrrad (21) gemäß einem der Ansprüche 1 bis 4,
wobei die Batterie (1) eine obere Abdeckung (31), eine untere Abdeckung (32), einen Batteriekörper und ein Distanzstück (80) umfasst, welches zwischen dem Batteriekörper und der oberen Abdeckung (31) vorgesehen ist, wobei das Batteriemessgerät (10) auf dem Distanzstück (80) befestigt ist.

6. Motorunterstütztes Fahrrad (21) gemäß Anspruch 5,
wobei das obere Gehäuse (31) der oberen Abdeckung (31) entspricht und das untere Gehäuse (32) der unteren Abdeckung (32) entspricht.

7. Motorunterstütztes Fahrrad (21) gemäß Anspruch 5,
wobei das Distanzstück (80) mit Wänden (84a, 84b, 84c, 84d) versehen ist, um das Batteriemessgerät (10) zu umgeben, und Sitzflächen (85a, 85b, 85c, 85d) versehen ist, welche an einer auf der Lenkstangenseite gelegenen der Wände (84a) anliegen, um Endabschnitte des Batteriemessgeräts (10) abzustützen;
wobei die Wände (84a, 84b, 84c, 84d) und die Sitzflächen (85a, 85b, 85c, 85d) mit Zwischenräumen (85e, 85f) versehen sind, um einen sich von dem Batteriemessgerät (10) aus erstreckenden Kabelbaum (89) hindurchzuführen, um den Kabelbaum (89) zu der entgegengesetzten Seite von der Lenkstange (15) zu führen.

8. Motorunterstütztes Fahrrad (21) gemäß Anspruch 7,
wobei das Distanzstück (80) mit einer Kabelbaumführung (81) versehen ist, um den Kabelbaum (89) zu führen, welcher sich von dem Batteriemessgerät (10) aus erstreckt und durch die Zwischenräume (85e, 85f) hindurchführt.

9. Motorunterstütztes Fahrrad (21) gemäß einem der Ansprüche 1 bis 8,
wobei das Batteriemessgerät (10) einen Anzeigeabschnitt (5) besitzt, welcher von einem Balkendiagrammmessgerät gebildet ist, das eine Mehrzahl von lichtemittierenden Dioden (51 - 55) verwendet, die in einem Feld angeordnet sind, und wobei das obere Gehäuse bzw. die obere Abdeckung (31) mit einem Fenster (5d) versehen ist, welches dem Feld der lichtemittierenden Dioden (51 - 55) entspricht.

10. Motorunterstütztes Fahrrad (21) gemäß Anspruch 9,
wobei das Fenster (5d) mit einem Etikett (70; 77) abgedeckt ist, welches einen transparenten Abschnitt (71 - 75) an einer dem Fenster (5d) entsprechenden Position besitzt, wobei das Etikett (70; 77) an einem Etikettbefestigungsbereich (5c) des oberen Gehäuses bzw. der oberen Abdeckung (31) angebracht ist und wobei der Etikettbefestigungsbereich (5c) ein höheres Niveau besitzt als sein Umgebungsabschnitt.

## Revendications

1. Bicyclette à moteur auxiliaire (21) comprenant :
un cadre disposé entre une roue avant et une roue arrière, ledit cadre supportant un guidon de direction et une paire de pédales et comprenant un tube principal (12) s'étendant de manière oblique vers le bas entre le guidon de direction et la paire de pédales ; et
une batterie (1) adaptée pour être montée de manière amovible sur un côté supérieur du tube principal (12) de ladite bicyclette, ladite batterie (1) comprenant un carter supérieur (31), un carter inférieur (32), un corps de batterie (2) et un indicateur de charge de batterie (10) destiné à indiquer une capacité de charge disponible de ladite batterie,
**caractérisée en ce que** :
ledit indicateur de charge de batterie (10) est monté à l'intérieur dudit carter supérieur (31), dans lequel ledit indicateur de charge de batterie (10) comprend, montées sur un substrat, une partie indicatrice (5), une partie de détection (3) et une partie d'intégration (4), et dans lequel ledit carter supérieur (31) comporte une fenêtre (5d) située juste au-dessus de la partie indicatrice (5).

2. Bicyclette à moteur auxiliaire (21) selon la revendication 1, dans laquelle la batterie (1) comprend une poignée (38), dans laquelle la poignée (38) est montée sur une partie d'extrémité (33) de la batterie (1), et dans laquelle l'indicateur de charge de batterie (10) est disposé à proximité de ladite poignée (38).

3. Bicyclette à moteur auxiliaire (21) selon la revendication 2, dans laquelle la poignée (38) est montée de manière à pouvoir pivoter sur un axe de poignée (38a) disposé sur la partie d'extrémité avant (33) de la batterie (1).

4. Bicyclette à moteur auxiliaire (21) selon l'une quelconque des revendications 1 à 3, dans laquelle l'indicateur de charge de batterie (10) destiné à indiquer à l'extérieur une capacité disponible de ladite batterie (1) est situé à proximité d'une potence de guidon (15) de ladite bicyclette (21) lorsque ladite batterie (1) est montée sur le côté supérieur dudit tube principal (12).

5. Bicyclette à moteur auxiliaire (21) selon l'une quelconque des revendications 1 à 4, dans laquelle ladite batterie (1) comprend un capot supérieur (31), un capot inférieur (32), un corps de batterie, et une entretoise (80) disposée entre ledit corps de batterie et ledit capot supérieur (31), ledit indicateur de charge de batterie (10) étant monté sur ladite entretoise (80).

6. Bicyclette à moteur auxiliaire (21) selon la revendication 5, dans laquelle le carter supérieur (31) correspond au capot supérieur (31) et le carter inférieur (32) correspond au capot inférieur (32).

7. Bicyclette à moteur auxiliaire (21) selon la revendication 5,
dans laquelle ladite entretoise (80) comporte des parois (84a, 84b, 84c, 84d) destinées à entourer ledit indicateur de charge de batterie (10) et des portées (85a, 85b, 85c, 85d) venant en butée contre l'une des parois (84a) située du côté de ladite potence de guidon afin de supporter des parties d'extrémité dudit indicateur de charge de batterie (10) ;
lesdites parois (84a, 84b, 84c, 84d) et lesdites portées (85a, 85b, 85c, 85d) comportant des espaces (85e, 85f) destins à procurer un passage à un faisceau de câbles (89) qui s'étend à partir dudit indicateur de charge de batterie (10) pour amener ledit faisceau de câbles (89) jusqu'au côté opposé de ladite potence de guidon (15).

8. Bicyclette à moteur auxiliaire (21) selon la revendication 7,
dans laquelle ladite entretoise (80) comporte un guide de faisceau de câbles (81) destiné à guider ledit faisceau de câbles (89) qui s'étend à partir dudit indicateur de charge de batterie (10) et qui passe au travers desdits espaces (85e, 85f).

9. Bicyclette à moteur auxiliaire (21) selon l'une quelconque des revendications 1 à 8, dans laquelle ledit indicateur de charge de batterie (10) comprend une partie indicatrice (5) ayant une configuration graphique linéaire qui utilise une pluralité de diodes électroluminescentes (51 à 55) aménagées en réseau, et ledit carter ou capot supérieur (31) comporte une fenêtre (5d) qui correspond au réseau desdites diodes électroluminescentes (51 à 55).

10. Bicyclette à moteur auxiliaire (21) selon la revendication 9,
dans laquelle ladite fenêtre (5d) est recouverte par une étiquette (70 ; 77) comprenant une partie transparente (71 à 75) disposée dans une position correspondant à ladite fenêtre (5d), ladite étiquette (70 ; 77) étant fixée sur une surface de fixation d'étiquette (5c) dudit carter ou capot supérieur (31), ladite surface de fixation d'étiquette (5c) étant située à un niveau plus élevé que la partie qui l'entoure.
